# EUROPEAN PATENT APPLICATION

(11) **EP 1 868 129 A2**
(43) Date of publication of application: **19.12.2007**
(21) Application number: 07252292.3
(22) Date of filing: 07.06.2007
(51) Int. Cl.: G06F 21/00

(54) **Time bound entitlement for digital content distribution framework**

(30) Priority: 12.06.2006 US 804490 P
(71) Applicant: Insight Direct USA, Inc., Tempe, AZ 85283 (US)
(72) Inventor: Vaughan, Michael J., Newton, MA 02466 (US); Jacobs, Erich K., Lexington, MA 02421 (US); Brusseau, Craig S., Charleston, SC 29412 (US); Dumont, Norman J., Fall River, MA 02720 (US); Penney, Bruce D., Arlington, MA 02476 (US); Covino, John M., Westborough, MA 01581 (US)
(74) Representative: Jones, Keith William

(57) **Abstract**

A computer readable media containing instructions for a processor to implement a plurality of steps comprising: accessing a time constraint for an entitlement, determining whether the time constraint has been satisfied, and responsive to the determination that the time constraint has been satisfied, modifying the entitlement, wherein the duration of the entitlement is less than the duration of the license for the digital content.

## Description

### CROSS-REFERENCE TO RELATED APPLICATIONS

The present application claims the benefit under 35 U.S.C. § 119 of U.S. provisional application Serial No. 60/804,490 filed June 12, 2006 and entitled "Time Bound Enablement Framework for Digital Content Distribution", hereby incorporated herein by reference for all purposes.

### STATEMENT REGARDING FEDERALLY SPONSORED RESEARCH OR DEVELOPMENT

Not applicable.

### REFERENCE TO A MICROFICHE APPENDIX

Not applicable.

### FIELD OF THE INVENTION

The present invention generally relates to a framework for distributing digital content to a plurality of users. Specifically, the present invention relates to a method for managing the digital content distribution throughout the enterprise to ensure the use of the digital content complies with the enterprise's licenses.

### BACKGROUND

Various techniques and products have been proposed for managing the distribution of digital content, such as software products, across an enterprise. However, the existing techniques and products are not widely used because they are cumbersome and/or product specific. For example, some existing software management products only track software that is installed through the management system. In such cases, software that has been installed prior to installation of the management system and/or software installed through an outside media are not tracked by the management system. Other systems may be able to track various software deployments throughout the enterprise, but are only applicable to a single software product. The problems inherent in the prior systems have made it difficult for enterprises to track their compliance with the various licenses associated with the software products and to account for the cost of acquiring new software products.

### SUMMARY OF THE INVENTION

In one aspect, the invention includes a computer readable media containing instructions for a processor to implement a plurality of steps comprising: accessing a time constraint for an entitlement, determining whether the time constraint has been satisfied, and responsive to the determination that the time constraint has been satisfied, modifying the entitlement, wherein the duration of the entitlement is less than the duration of the license for the digital content.

In another aspect, the invention includes a method comprising: accepting a time constraint for an entitlement, allocating the entitlement to an entity, allowing the entity to consume the entitlement, determining whether the time constraint has been satisfied, and responsive to the determination that the time constraint has been satisfied, revoking the entitlement from the entity.

In a third aspect, the invention includes a system comprising: a processor configured to implement a plurality of steps comprising: accepting a time constraint for an entitlement, determining whether the time constraint has been satisfied, and responsive to the determination that the time constraint has been satisfied, modifying the entitlement.

### BRIEF DESCRIPTION OF THE DRAWINGS

FIG. 1 illustrates one embodiment of the digital content distribution framework;

FIG. 2 illustrates one embodiment of the entitlement coordination framework;

FIG. 3 illustrates one embodiment of an entity entitlement summary page;

FIG. 4 illustrates one embodiment of an entity entitlement details page;

FIG. 5 illustrates one embodiment of an entitlement product search page;

FIG. 6 illustrates one embodiment of an entity entitlement page;

FIG. 7 illustrates another embodiment of an entity entitlement page;

FIG. 8 illustrates another embodiment of an entity entitlement page;

FIG. 9 illustrates one embodiment of an entitlement allocation detail page;

FIG. 10 illustrates one embodiment of an entitlement level search page;

FIG. 11 illustrates another embodiment of entitlement allocation detail page;

FIG. 12 illustrates one embodiment of an entitlement allocation return page;

FIG. 13 illustrates one embodiment of an unconsumed entitlement page;

FIG. 14 illustrates one embodiment of a flowchart for an entitlement allocation routine;

FIG. 15 illustrates one embodiment of a flowchart for an entitlement consumption routine;

FIG. 16 illustrates one embodiment of a flowchart for an entitlement return routine;

FIG. 17 illustrates one embodiment of a flowchart for an entitlement revocation routine; and

FIG. 18 illustrates one embodiment of a framework for a computer.

### DETAILED DESCRIPTION OF THE PREFERRED EMBODIMENTS

In the following description, for the purposes of explanation, numerous specific details are set forth in order to provide a thorough understanding of embodiments of the present invention. It will be apparent, however, to one skilled in the art that embodiments of the present invention may be practiced without some of these specific details. In other instances, well-known structures and devices are shown in block diagram form.

One specific problem that no known prior system has addressed is improving the tracking, and management of existing licenses. Frequently, enterprises purchase computers with pre-loaded software and do not use the software or use the software for a limited time. When the software goes unused, the license associated with the software on the new computer is wasted because the license is not known or not tracked by the enterprise. Instead, when the enterprise needs to install an additional copy of the software on another computer, the enterprise will acquire another license, which results in excessive costs and duplicate licenses. Consequently, a need exists for various improvements in the techniques by which digital content, such as software, is deployed, tracked, and managed throughout an enterprise.

In recognition of the need to deploy, track, and manage the software, a centralized digital content distribution framework and services in support thereof are described. According to one embodiment, a centralized entitlement coordination framework is provided that improves the ability of the enterprise to distribute and use software without exceeding the enterprise's licenses. Specifically, the entitlement coordination framework creates entitlements for each software license and limits the use of the software to only the users who have the entitlements. In one embodiment, the enterprise may allocate the entitlements to individual users or a group of users, such as a community, a department, or the entire enterprise. The allocation of the entitlement has the effect of reserving the entitlement for the users. After the users have been allocated the entitlements, they may run the software by consuming the entitlement. Only users who have consumed the entitlements may run the software product. The users may then return the entitlement when they no longer need to use the software. Alternatively, the entitlement coordinator can revoke the entitlement from the users.

One advantage of the entitlement coordination framework is the ability to apply time constraints to the entitlements. Specifically, when allocating the entitlements to the users, the enterprise can set a specific start date before which the user cannot be allocated or consume the entitlement. Similarly, the enterprise can set a specific end date after which the user cannot be allocated or consume the entitlement. If the user has not returned the entitlement by the end date, the entitlement coordination framework revokes the entitlement and the user cannot access the software product any further. Consequently, the time constraints allow the enterprise to control the use of software products and maintain compliance with the licenses. Moreover, the time constraints also allow the enterprise to increase the value of the licenses by allowing multiple users to use the same license at different points in time such that the enterprise decreases the time that the software license goes unused. Finally, the entitlement coordinator allows the enterprise to correlate the cost of the software product with its use and distribute the cost over many individual users, departments, or communities based on their actual use of the software product, rather than their mere acquisition of the software product. Such a feature reduces the cost of the software to each user, community, and department.

The entitlement coordination framework includes a database that aggregates the licenses, entitlements, costs, and media for all of the digital content in the enterprise and monitors the entitlements to ensure that the enterprise is compliant with its licenses. The entitlement coordination framework is agnostic as to how the media is installed on the individual computers because the various users' rights to the software are governed by their entitlements, not whether the software is installed on the user's computer. In an embodiment, the database also tracks each user's entitlements with their login information, such that the user is entitled with the same software no matter which computer they log into. The database tracks the status of every entity within the enterprise and the entitlements that each entity has been allocated and has consumed or used. The database also allows the rights of all the users to purchase and manage the software to be defined such that some users have a greater level of software management capabilities than other users. The database also allows the administrator to restrict individual users in an enterprise, community, or department from being entitled in specific software products. Consequently, the database allows an administrator to manage the software entitled to users at various levels throughout the enterprise.

Brief definitions of terms used throughout this application are given below.

The term "allocate" generally refers to the designation of at least one entitlement as reserved for a specific entity. An allocated entitlement is sometimes referred to as an inactive entitlement because the entitlement has been reserved for the entity, but is not being used.

The term "community" generally refers to a group of users that is a subset of an enterprise, and may include a department.

The terms "connected" or "coupled" and related terms are used in an operational sense and are not necessarily limited to a direct or physical connection or coupling.

The term "consume" generally refers to the use of an entitlement by a specific entity, usually a user. A consumed entitlement is sometimes referred to as an active entitlement because the entitlement is being used by the entity.

The term "department" generally refers to a group of users that is a subset of an enterprise and/or a community.

The term "deployment" generally refers to the act of installing a software product onto a computer system.

The term "enterprise" generally refers to a company, corporation, partnership, or another type of group of users.

The term "entitlement" generally refers to a right or claim to use digital content, such as software products. According to embodiments of the present invention, the software license grants an enterprise the right to use the software product.

The term "entity" generally refers to an enterprise, a community, a department, or a user.

The phrases "in one embodiment," "according to one embodiment," and the like generally mean the particular feature, structure, or characteristic following the phrase is included in at least one embodiment of the present invention, and may be included in more than one embodiment of the present invention. Importantly, such phrases do not necessarily refer to the same embodiment.

If the specification states a component or feature "may", "can", "could", or "might" be included or have a characteristic, that particular component or feature is not required to be included or have the characteristic.

The term "responsive" includes completely or partially responsive.

The term "satisfy" generally refers to the meeting of the conditions of a time constraint. For example, if a time constraint is the start date, e.g. June 2^{nd}, that an entitlement is allocated to an entity, then the time constraint is satisfied when the current day is June 2^{nd}.

The term "user" generally refers to a person in an enterprise, who may also be part of a community and/or a department.

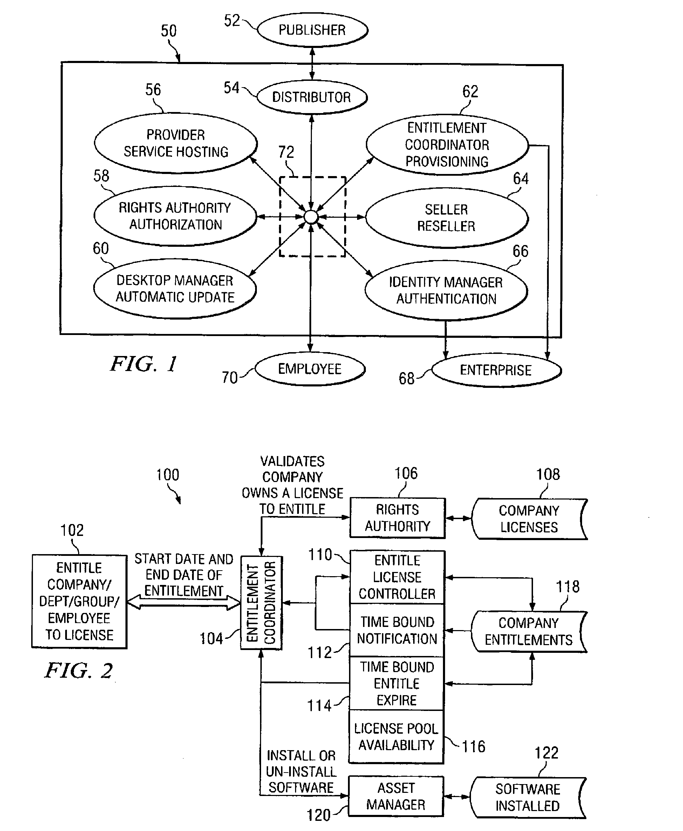

FIG. 1 conceptually illustrates one embodiment of the various parties that may participate in a digital content distribution framework 50 and components/services that may facilitate interactions among the various parties. According to the example digital content distribution framework architecture depicted the parties, such as publisher 52, distributor 54, provider 56, seller 64, enterprise 68, and employee 70 (e.g., enterprise user), invoke the capabilities of a set of web services, such as an identity manager 66, a rights authority 58, an entitlement coordinator 62, and a desktop manager 60. Interactions between digital content distribution framework participants and the various components of the digital content distribution framework 50 may be orchestrated by a client-side Application Programming Interface (API) and set of library services 72.

Enterprises, such as enterprise 68, are organizations that purchase software licenses, directly or indirectly, for themselves. The enterprise contains a plurality of enterprise users, such as employee 70. Publisher 52 may create and provide digital content for consumption by other participants in the digital content distribution framework 50. The function of the distributor 54 is to accept software kits from publishers and make these kits available to providers, sellers and enterprise users. The function of the provider 56 is to establish a managed environment where software is hosted in a Software-as-a-Service model. The distributor 54 may make use of the rights authority 58 to determine access rights of participants registered with the digital content distribution framework 50. The function of the desktop manager 60 is to keep enterprise user's desktops up-to-date with the latest versions of software to which they are entitled. The role of the entitlement coordinator 62 is to provide a more fine-grained level of control over which enterprise users within the enterprise are entitled to access and use the software. The function of the seller 64 is to sell software kits on behalf of publishers to enterprises, enterprise users, providers or other end users. All participants, e.g., components, web services and entities, such as an enterprise, in the digital content distribution framework 50 are registered with the identity manager 66 to facilitate authentication during subsequent sessions. More detail regarding the various components illustrated in FIG. 1 and their functions, capabilities, and responsibilities are described in U.S. Patent Application Serial Number 10/961,811 to Vaughn et al., filed October 8, 2004 and entitled "Digital Content Distribution Framework," incorporated herein by reference as if reproduced in its entirety.

FIG. 2 illustrates one embodiment of the entitlement coordination framework 100. The entitlement coordination framework 100 comprises an entity 102, an entitlement coordinator 104, a rights authority 106, a database of enterprise licenses 108, a license controller 110, a time bound notification mechanism 112, an enterprise entitlement database 118, a database of time bound entitlement expirations 114, a license pool availability database 116, an asset manager 120, and a software database 122. The entitlement coordinator 104 is the central component that coordinates communication between the other components illustrated in FIG. 2. For example, the entitlement coordinator communicates with rights authority 106 to confirm that the enterprise owns a license to entitle to the entities 102 within the enterprise. The rights authority 106 may access a plurality of licenses 108 to verify the existence of the licenses and notify the entitlement coordinator of additions, deletions, or mortifications to the licenses. The entitlement coordinator 104 also communicates with the entities 102 in the enterprise to allocate and revoke the entitlements from the entities 102. The entitlement coordinator 104 may also communicate with an asset manager 120 to download, install, or uninstall the software on the various computers within the enterprise. The asset manager 120 keeps a database 122 of software, including a list of the different software products installed on the various computers throughout the enterprise.

The entitlement controller 104 also communicates with an entitle license controller 110 that controls the entitlements used throughout the enterprise. The entitle license controller 110 keeps an updated database 118 of all of the enterprise's entitlements. The entitle license controller 110 also tracks the available licenses using the license pool availability 116. The time bound notification mechanism 112 tracks the time constraints associated with each of the entitlements and uses the time bound entitlement expiration mechanism 114 to notify the entitlement coordinator 104 and the entitle license controller 110 when the time constraints are satisfied.

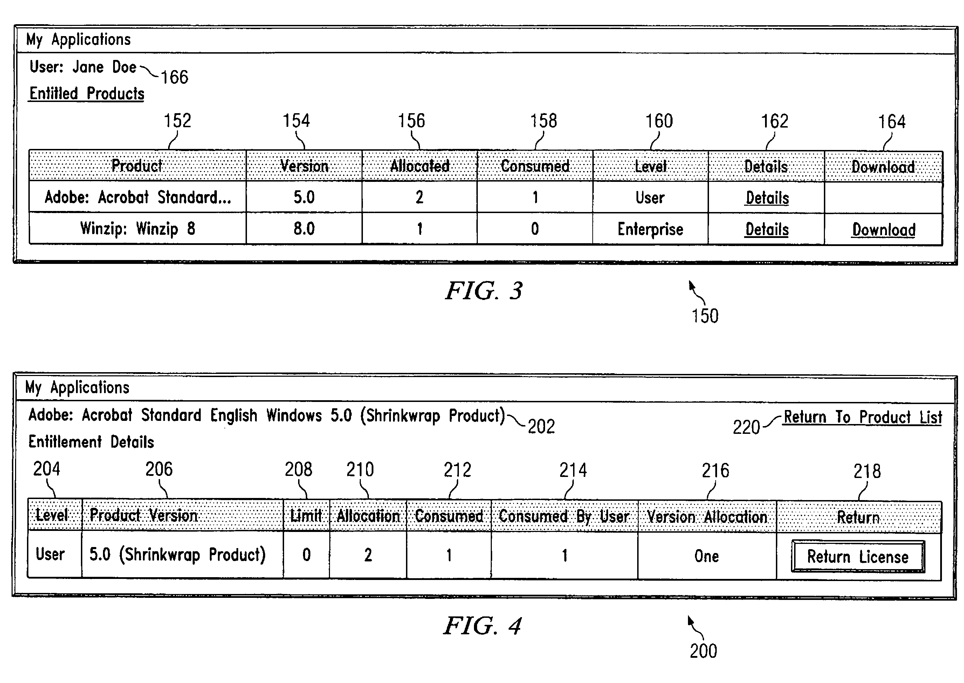

In an embodiment, the entitlement coordination framework includes a plurality of pages that allow an administrator, manager, supervisor, or other authorized user (hereinafter, "administrator") within an enterprise to manage the entitlements within an enterprise. Specifically, the pages illustrated in FIGS. 3 - 11 allow the administrator and/or the various users within the enterprise to allocate, consume, remove, and revoke the entitlements from the various entities within the enterprise. Persons of ordinary skill in the art will appreciate that the pages illustrated herein can be configured with additional features that are common to graphical user interfaces, such as minimize, maximize, restore, close, apply, and/or cancel buttons commonly found on graphical user interfaces.

In an embodiment, the user is able to access a user entitlement summary, such as user entitlement summary 150 shown in FIG. 3. The user entitlement summary 150 is typically viewed by the user via a pull down menu and summarizes the products associated with the entitlements that have been allocated to the user. The user entitlement summary 150 displays the entitlements for the user specified in the user line 166, specifically Jane Doe. The user entitlement summary 150 includes entitlements for every level that Jane is associated with, such as his enterprise, her community, his department, and himself as a user. Thus, the user entitlement summary 150 displays all of the entitlements that have been allocated to a particular user. Persons of ordinary skill in the art will appreciate that while the user entitlement summary 150 shown in FIG. 3 is described in conjunction with a user, the user entitlement summary 150 may display the entitlements for any level of entity, including a department, a community, or an enterprise.

The user entitlement summary 150 comprises: a products column 152, a version column 154, a quantity allocated column 156, a quantity consumed column 158, an allocation level column 160, a details link 162, and a download link 164. The products column 152 lists all of the different products that the user is entitled to use. The version column 154 lists the product version for each product. If a user is entitled to multiple versions of the same product, then the different versions are represented by different rows in the user entitlement summary 150. The quantity allocated column 156 lists the quantity of entitlements that are allocated to the user for each product. The quantity consumed column 158 lists the quantity of entitlements that the user has consumed for each product. The allocation level column 160 lists the level to which each product was allocated to the user. For example, the Adobe Acrobat® product shown in FIG. 3 was allocated to Jane on a user level. In other words, the administrator allocated the Acrobat® entitlement specifically to Jane. In contrast, the WinZip® 8 product was allocated to Jane on an enterprise level. In other words, the administrator allocated the WinZip® entitlement to everyone within the enterprise. Other entitlement levels include the department level and the community level. The details link 162 allows the user to open the user entitlement detail page, which is discussed in greater detail below. The download link 164 allows the user to download or install the product to the computer and may only appear if the product is not already installed on the computer.

In an embodiment, the user is able to access a user entitlement detail page, such as the user entitlement detail 200 shown in FIG. 4. The user entitlement detail 200 may be accessed by clicking on the details link 162 in FIG. 3 or via a pull down menu. The user entitlement detail 200 shows the specific information regarding one specific product that has been allocated to the user, here the Adobe Acrobat® product allocated to Jane. The user entitlement detail 200 also allows the user to return an entitlement to the enterprise if the entitlement has not been consumed. Persons of ordinary skill in the art will appreciate that while the user entitlement detail 200 shown in FIG. 4 is described in conjunction with a user, the user entitlement detail 200 may display the entitlements for any level of entity, including a department, a community, or an enterprise.

The user entitlement detail 200 comprises: a product line 202, an allocation level column 204, a product version column 206, a distribution limit column 208, a quantity allocated column 210, a quantity consumed column 212, a quantity consumed by the specific user column 214, a version allocation column 216, and a return button 218. The product line specifies the product associated with the various details in the user entitlement detail 200. The allocation level column 204 lists the level at which the product was allocated to the user. For example, the Adobe Acrobat® product was allocated to Jane on a user level. The product version column 206 lists the version for the product. The distribution limit column 208 indicates the number of times the product can be distributed to other machines. A distribution limit of 0 means that unlimited file access (e.g. download and installation) can occur against the entitlement. When the distribution limit is greater than 0, file access will be tracked for each user that has consumed the entitlement. Once the distribution limit is reached, the user consumes an additional entitlement in order to once again access the software. The quantity allocated column 210 lists the quantity of allocations that the user has received for the product. A user may receive a plurality of allocated entitlements so that the user can install the software on a plurality of computers for which they are a user, such as Jane's desktop and notebook computers. The quantity consumed column 212 lists the quantity of entitlements that the user has consumed for the product. The quantity consumed by the specific user column 214 lists the quantity of entitlements that the specific user (e.g. the person viewing the user entitlement detail) has consumed for the product listed in the product line 202. When the user is viewing his own entitlements, there will always be a one-to-one correlation between the quantity consumed column 212 and the quantity consumed by user column 214. However, there will not necessarily be a one-to-one correlation if the entitlement detail is for a department, community, or enterprise. The version allocation column 216 shows the version limits of the user's allocation and may be one of the fields listed in Table 1:

**Table 1**

| **Version Allocation** | **Description** |
|---|---|
| One | The user has been entitled to a specific version |
| Latest | The user will always see the latest version available, regardless of what version to which the user has been entitled. |
| Earlier | The user will see the version they were entitled to and any previous versions that are available. |
| Later | The user will see the version they were entitled to and any subsequent versions that are available. |

The return license button 218 allows the user to return at least one of the allocated entitlements by initiating opening the return allocated entitlement page discussed below. The user can return to the user entitlement summary by clicking the "return to product list" link 220.

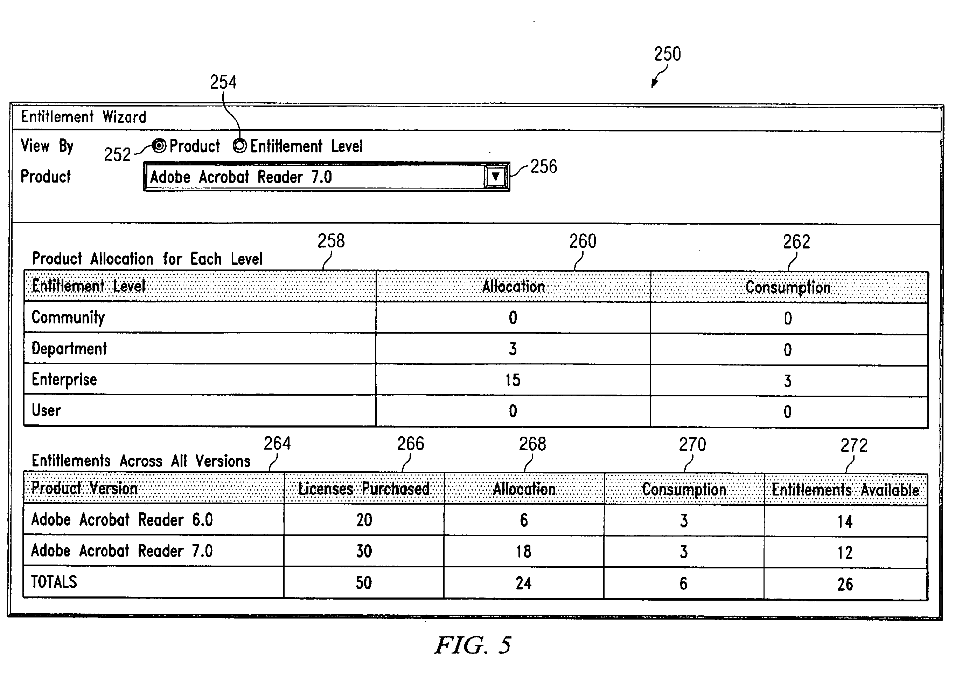

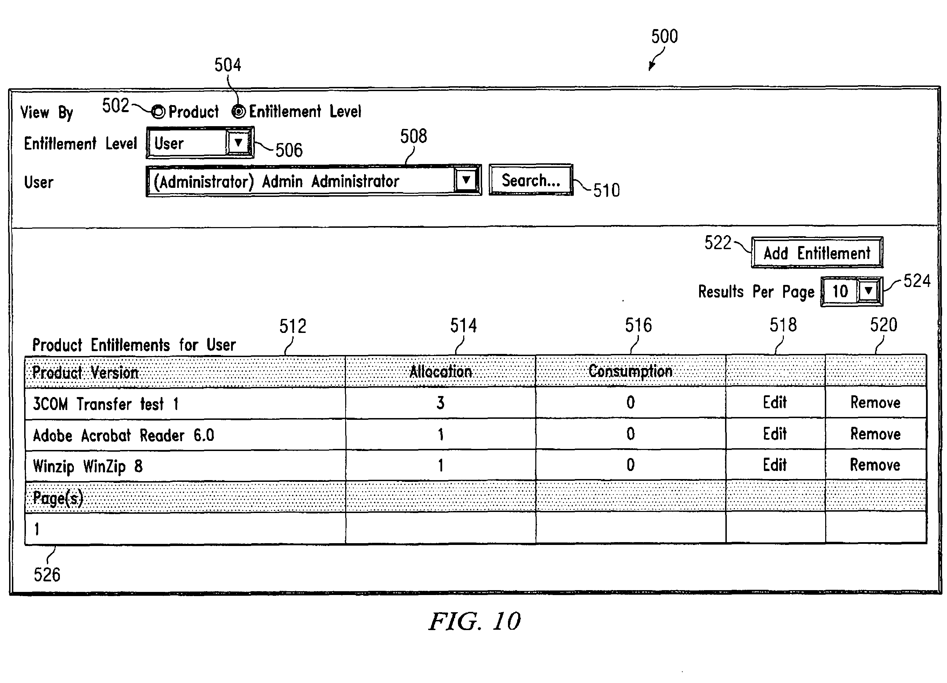

In an embodiment, the administrator is able to access an entitlement product search page, such as the entitlement product search 250 shown in FIG. 5. The entitlement product search 250 allows the administrator to view the various levels of entitlement for a specific product using the product drop down menu 256, in this case Adobe Acrobat® Reader v7.0. The entitlement product search 250 also displays the entitlements across all versions of the product, such as versions 6.0 and 7.0 of the Adobe Acrobat® Reader. The user may switch back and forth between the entitlement product search page 250 shown in FIG. 5 and the entitlement level search page 500, shown in FIG. 10, using the product radio button 252 and the entitlement level radio button 254.

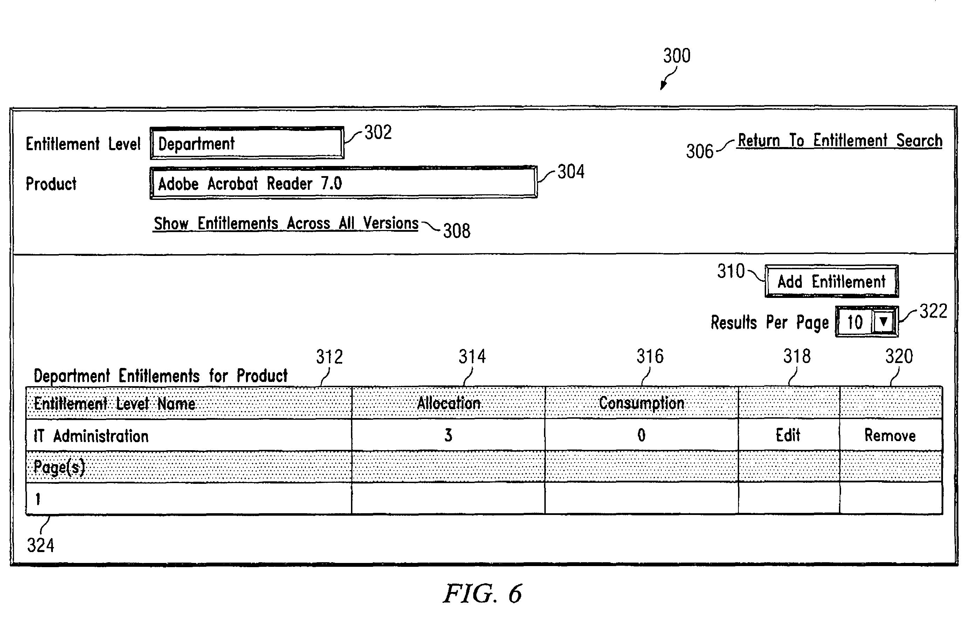

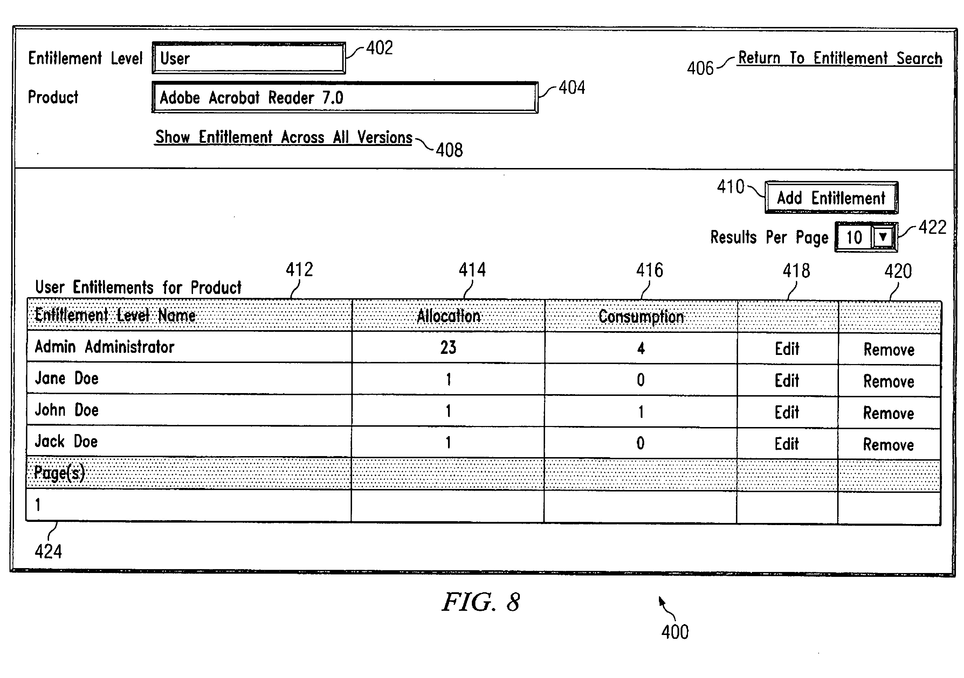

The entitlement product search page 250 comprises: an entitlement level column 258, a quantity allocated column 260, and quantity consumed column 262. The entitlement level column 258 shows the different levels at which the entitlements are allocated and consumed. In addition, each level displayed in the entitlement level column 258 is a clickable link that opens the entity entitlement pages, such as those shown in FIGS. 6 and 8. The quantity allocated column 260 shows the quantity of allocated entitlements for each entity level. The quantity consumed column 262 shows the quantity of consumed entitlements for each entity level.

The entitlement product search page 250 also comprises: the product version column 264, the licenses purchased column 266, the quantity allocated column 268, the quantity consumed column 270, and the entitlements available column 272. The product version column 264 shows the various versions for the selected product. The licenses purchased column 266 shows the quantity of licenses purchased for each version. The quantity allocated column 268 shows the quantity of allocated entitlements for each version. The quantity consumed column 270 shows the quantity of consumed entitlements for each version. The entitlements available column 272 shows the quantity of entitlements that are unallocated and unconsumed for each version, and thus represent the available entitlements within the enterprise.

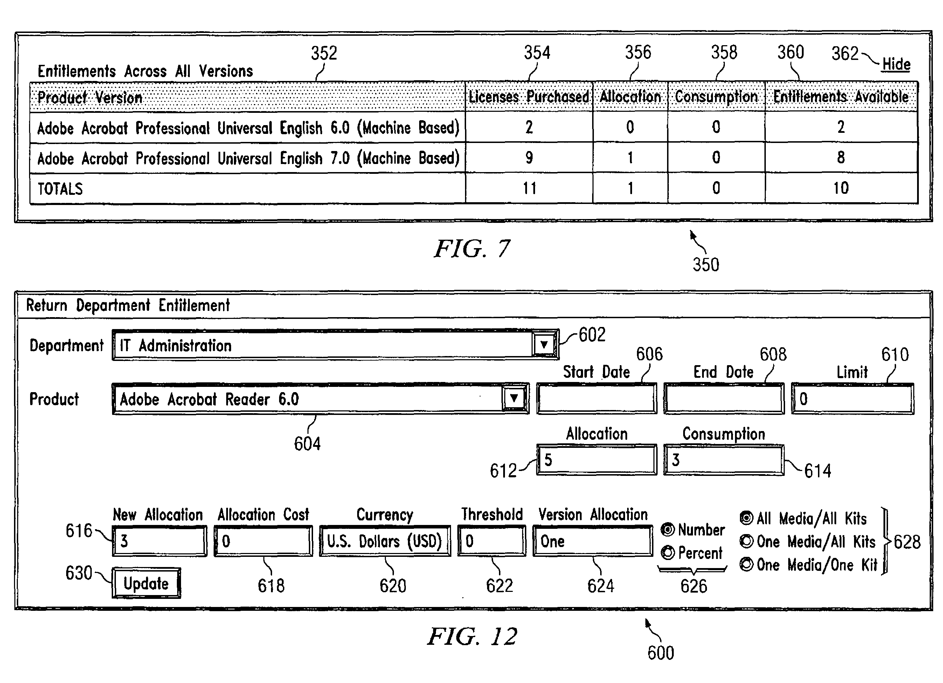

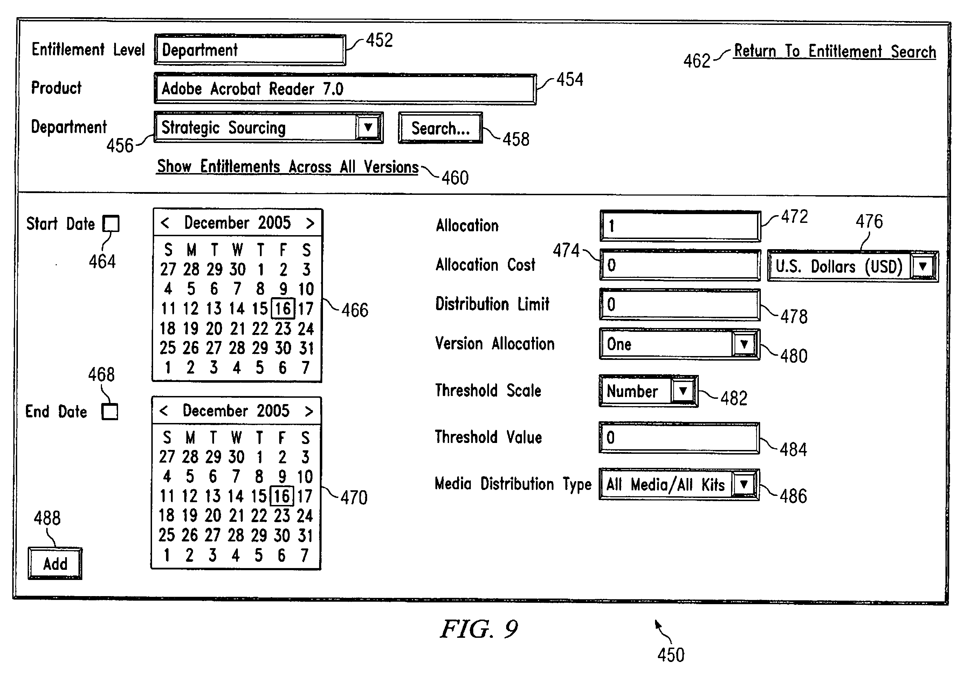

In an embodiment, the administrator is able to access an entity entitlement page, such as the entity entitlement page 300 shown in FIG. 6. The administrator may access the entity entitlement page 300 by clicking on one of the entity links in the entitlement product search 250 shown in FIG. 5, specifically the department link. The entitlement product search 300 allows the administrator to view the entitlements for a specific product and a specific entity level. Specifically, the entitlement level line 302 shows that the selected entity level is a department. Similarly, the product line 304 shows that the selected product is Adobe Acrobat® Reader v7.0. By clicking the show entitlements across all version link 308, the user may open a page that shows the entitlements across the various versions, such as the page shown in FIG. 7. By clicking the return to entitlement search link 306, the user returns to the entitlement product search page 250 shown in FIG. 5. By clicking on the add entitlement button 310, the user is directed to the entitlement allocation detail page, such as the one shown in FIG. 9.

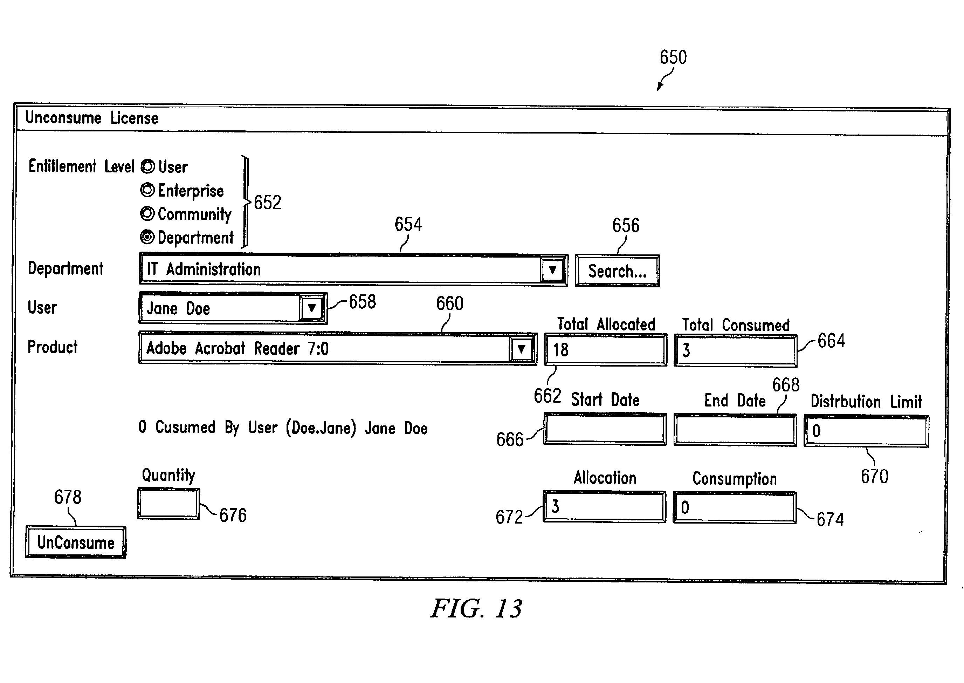

The entity entitlement page 300 comprises: the entitlement level name column 312, the quantity allocated column 314, the quantity consumed column 316, the edit link 318, and the remove link 320. The entitlement level column 312 lists the various departments within the enterprise that have been allocated or have consumed entitlements for the product. The quantity allocated column 314 shows the quantity of entitlements allocated to each department. The quantity consumed column 316 shows the quantity of entitlements consumed by each department. The edit link 318 allows the administrator to edit any of the details for the entitlement allocations or consumptions and may open an entitlement allocation detail, such as the one illustrated in FIG. 9. The remove link 320 allows the administrator to return an allocated entitlement to the enterprise and may open an allocated entitlement return page, such as the one illustrated in FIG. 12. The quantity of results per page can be controlled using the results per page drop down box 322 and the number of pages is shown in the page column 324.

In an embodiment, the administrator is able to view another entity entitlement page, such as the entity entitlement page 350 shown in FIG. 7. The entity entitlement page 350 displays the entitlements for all versions of the selected entity level and product, and is similar to the lower table shown in FIG. 5. Clicking on the show entitlements across all versions link 308 in FIG. 6 may open entity entitlement page 350 shown in FIG. 7. The entity entitlement page 350 may appear as a pop-up window or may appear as an extension of the entity entitlement page 300 shown in FIG. 6.

Similar to the lower table in FIG. 5, the entity entitlement page 350 in FIG. 7 comprises: the product version column 352, the licenses purchased column 354, the quantity allocated column 356, the quantity consumed column 358, and the entitlements available column 360. The product version column 352 shows the various versions for the selected product. The licenses purchased column 354 shows the quantity of licenses purchased for each version. The quantity allocated column 356 shows the quantity of allocated entitlements for each version. The quantity consumed column 358 shows the quantity of consumed entitlements for each version. The entitlements available column 360 shows the quantity of entitlements that are unallocated and unconsumed for each version, and thus represent the available entitlements within the entity, in this case the IT Administration department. This allows the administrator to manage the number of available entitlements and return unneeded entitlements to the enterprise, perhaps for a budgetary credit or reimbursement. The user may hide the entity entitlements across all versions page 350 by clicking on the hide link 362.

In an embodiment, the administrator is able to access another entity entitlement page, such as the entity entitlement page 400 shown in FIG. 8. The entity entitlement page 400 may be accessed by clicking on one of the entity links in the entitlement product search page 250, in this case the user link. The entitlement product search 400 allows the administrator to view the entitlements for a specific product and a specific entity level. Specifically, the entitlement level line 402 shows that the selected entity level is a user. Similarly, the product line 404 shows that the selected product is Adobe Acrobat® Reader v7.0. By clicking the return to entitlement search link 406, the user returns to the entitlement product search page 250 shown in FIG. 5. By clicking the show entitlements across all version link 408, the user may open a page that shows the entitlements across the various versions, such as the page shown in FIG. 7. By clicking on the add entitlement button 410, the user is directed to the entitlement allocation detail page, such as the one shown in FIG. 9.

The entity entitlement page 400 comprises: the entitlement level name column 412, the quantity allocated column 414, the quantity consumed column 416, the edit link 418, and the remove link 420. The entitlement level column 412 lists the various users within the enterprise that have been allocated or have consumed entitlements for the product. The quantity allocated column 414 shows the quantity of entitlements allocated to each user. The quantity consumed column 416 shows the quantity of entitlements consumed by each user. The edit link 418 allows the administrator to edit any of the details for the entitlement allocations or consumptions and may open an entitlement allocation detail, such as the one illustrated in FIG. 9. The remove link 420 allows the administrator to return an allocated entitlement to the enterprise and may open an allocated entitlement return page, such as the one illustrated in FIG. 12. The quantity of results per page can be controlled using the results per page drop down box 422 and the number of pages is shown in the page column 424.

In an embodiment, the administrator is able to access the entitlement allocation detail page, such as the entitlement allocation detail 450 shown in FIG. 9. The entitlement allocation detail 450 may be accessed by clicking on the add entitlement button 410 in FIG. 8. The entitlement allocation detail page allows the administrator to specify the details for the allocated entitlement. Specifically, the user can specify the start date and/or stop date for the allocated entitlement for any entity and/or for any product. This allows the administrator to more tightly control the entitlements, such that he can gain an additional benefit from the enterprise's licenses. More particularly, the entitlement allocation detail page 450 shows the allocation details for the entity level shown in the entity level line 452, here the department level, the product shown in the product line 454, here the Adobe Acrobat® Reader 7.0, and the specific entity shown in the entity line 458, namely the strategic sourcing department. The administrator may search for various users using the search button 458, which will initiate a pop-up window that allows the administrator to search for the appropriate entity using, for example, an enterprise directory. The heading for the entity line 458, e.g. "department", will change according to the entity level selected in the entity level line 452. By clicking the show entitlements across all version link 408, the user may open a page that shows the entitlements across the various versions, such as the page shown in FIG. 7. The administrator can return to the entitlement product search page shown in FIG. 5 by clicking the return to entitlement search link 462.

The entitlement allocation detail page 450 allows the administrator to specify various constraints for the entitlement that is allocated to the entity. For example, the administrator can specify the start date for the allocation by selecting the start date check box 464 and selecting a date on the start date calendar 466. In embodiments, the start date is the date the entitlement allocation will begin and is no earlier than the current date. The administrator can scroll through the various months and years using the two directional arrows on the start date calendar 466. In addition, the administrator can specify the stop date for the allocation by selecting the stop date check box 468 and selecting a date on the stop date calendar 470. In embodiments, the stop date is the date the entitlement allocation will end and is no earlier than the current date. The administrator can scroll through the various months and years using the two directional arrows on the stop date calendar 470.

Although not shown in FIG. 9, there are a number of alternative methods by which the administrator may place time constraints upon the entitlement. For example, the administrator may specify a duration, e.g. 90 days, along with either the start date or the stop date such that the duration runs before or after the start date or stop date, as appropriate. This feature is useful when users will only need an entitlement for a limited period of time, or have a deadline and will not need the entitlement after the deadline. Further in the alternative, the user may specify that the stop date is a specified duration, e.g. 30 days, of non-use by the user. Such an embodiment is particularly useful when the administrator wants to free up entitlements for software that is not being used. Finally, the administrator may define the entitlement using a start date and a duration such that the start date indicates when the entitlement is allocated to the user, but the entitlement lasts for a specified duration after the entitlement is consumed, not after it is allocated. Such an embodiment is useful when the administrator wants the entitlement to be limited to a specified duration, e.g. 90 days, after it is consumed, not after it is allocated. Such an embodiment is useful because the entity actually uses the software for a specified period of time, rather than just having the right to use the software for the specified period of time.

The administrator may specify the allocation in the allocation line 472. The allocation is the number of licenses being allocated at the entitlement level. The administrator may also specify the allocation cost in the allocation cost line 474 and the allocation cost currency in the allocation cost drop down box 476. The allocation cost is the cost of consuming each entitlement and is used by an accounting interface to apply the cost of the entitlement to the specific entity. Such cost is typically applied to the entities annual budget by the enterprise's internal accounting department. The administrator may also specify the distribution limit in the distribution limit line 478. The distribution limit is the number of times that the administrator can access the product, with a zero indicating that the product may be accessed an unlimited number of times.

The administrator may also specify the version allocation in the version allocation line 480. The version allocation specifies the availability of prior and/or subsequent versions to the administrator and may be one, latest, earlier, or later as defined above. The administrator may also specify the threshold using the threshold scale line 482 and the threshold value line 484. The threshold value is the amount of entitlements that remain when a message is sent to the administrator indicating that the entitlement threshold has been reached, which is generally measured as either a number or a percent of the total entitlements.

Finally, the administrator can specify the media distribution type in the media distribution type box 486. The media distribution type determines whether users can see all media types (e.g. CD, streaming, download, and so forth) available for a product or if they are limited to viewing specific media and/or kits. If the media distribution type is other than "All media/all types", then a media field may appear to allow the administrator to specify the specific media and/or kits associated with the entitlement. The administrator adds the defined constraints to the allocation by clicking the submit button 488.

In an embodiment, the administrator is able to access an entitlement level summary page, such as the entitlement level summary page 500 shown in FIG. 10. The entitlement level summary is a table that summarizes the products that have been allocated to a specific entity level. The entitlement level summary 500 displays the entitlements for the entity level specified in the entity level line 506 and the entity line 508, specifically the Administrator. The administrator may search for various users using the search button 510, which will initiate a pop-up window that allows the administrator to search for the appropriate entity using, for example, an employee directory.

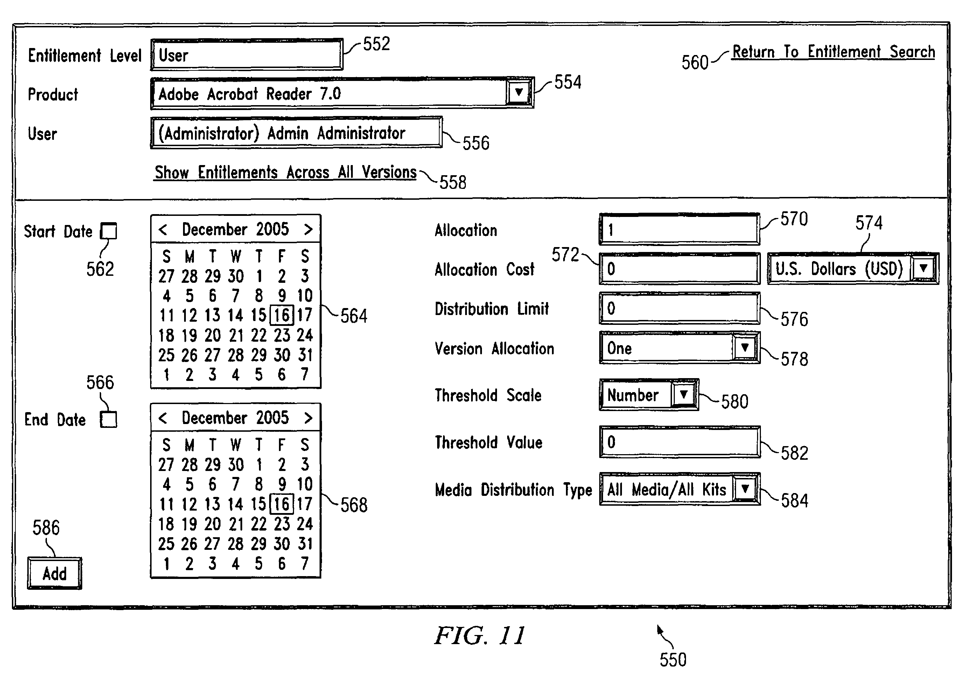

The entitlement level summary 500 comprises a products column 512, a quantity allocated column 514, a quantity consumed column 516, a details link 518, and a remove link 520. The products column 512 lists all of the different products that have been allocated to the entity selected in the entity line 508. The quantity allocated column 514 lists the quantity of allocated entitlements for each of the products. The quantity consumed column 516 lists the quantity of entitlements that the entity has consumed for each of the products. The edit link 518 allows the user to edit any of the details for the entitlement allocations or consumptions and may open a pre-populated page such as the page illustrated in FIG. 11. The remove link 520 allows the entity to return the entitlement and make it available for use by other parties and may open the allocated entitlement return page shown in FIG. 12. The quantity of results per page can be controlled using the results per page drop down box 524, and the number of pages is shown in the page column 526. By clicking on the add entitlement button 522, the user is directed to the entitlement allocation detail page, such as the one shown in FIG. 11.

In an embodiment, the administrator is able to access the entitlement allocation detail page, such as the entitlement allocation detail 550 shown in FIG. 11. The entitlement allocation detail 550 may be accessed by clicking on the add entitlement button 522 in FIG. 10. The entitlement allocation detail page 550 allows the administrator to specify the details for the allocated entitlement. Specifically, the administrator can specify the start date and/or stop date for the allocated entitlement for any entity and/or for any product. More particularly, the entitlement allocation detail page 550 shows the allocation details for the entity level shown in the entity level line 552, here the user level, the product shown in the product line 554, here the Adobe Acrobat® Reader 7.0, and the specific entity shown in the entity line 556, namely the Administrator. The heading for the entity line 556, e.g. "user", will change according to the entity level selected in the entity level line 556. By clicking the show entitlements across all version link 558, the user may open a page that shows the entitlements across the various versions, such as the page shown in FIG. 7. The administrator can return to the entitlement product search page shown in FIG. 10 by clicking the return to entitlement search link 560.

The entitlement allocation detail page 550 allows the user to specify various constraints for the entitlement that is allocated to the entity. For example, the user can specify the start date for the allocation by selecting the start date check box 562 and selecting a date on the start date calendar 564. In embodiments, the start date is the date the entitlement allocation will begin and is no earlier than the current date. The user can scroll through the various months and years using the two directional arrows on the start date calendar 564. In addition, the user can specify the stop date for the allocation by selecting the stop date check box 566 and selecting a date on the stop date calendar 568. In embodiments, the stop date is the date the entitlement allocation will end and is no earlier than the current date. The user can scroll through the various months and years using the two directional arrows on the stop date calendar 568.

Although not shown in FIG. 11, there are a number of alternative methods by which the administrator may place time constraints upon the entitlement. For example, the administrator may specify a duration, e.g. 90 days, along with either the start date or the stop date such that the duration runs before or after the start date or stop date, as appropriate. Further in the alternative, the user may specify that the stop date is a specified duration, e.g. 30 days, of non-use by the user. Such an embodiment is particularly useful when the administrator wants to free up entitlements for software that is not being used. Finally, the administrator may define the entitlement using a start date and a duration such that the start date indicates when the entitlement is allocated to the user, but the entitlement lasts for a specified duration after the entitlement is consumed, not after it is allocated. Such an embodiment is useful when the administrator wants the entitlement to be limited to a specified duration, e.g. 90 days, after it is consumed, not after it is allocated.

The user may specify the allocation in the allocation line 570. The allocation is the number of licenses being allocated at the entitlement level. The user may also specify the allocation cost in the allocation cost line 572 and the allocation cost currency in the allocation cost drop down box 574. The allocation cost is the cost of consuming each entitlement. Such cost is typically applied to the entities annual budget by the enterprise's internal accounting department. The user may also specify the distribution limit in the distribution limit line 576. The distribution limit is the number of times that the user can access the product, with a zero indicating that the product may be accessed numerous times.

The user may also specify the version allocation in the version allocation line 578. The version allocation specifies the availability of prior and/or subsequent versions to the user and may be one, latest, earlier, or later as defined above. The user may also specify the threshold using the threshold scale line 580 and the threshold value line 582. The threshold value is the amount of entitlements that remain when a message is sent to the user indicating that the entitlement threshold has been reached, which is generally measured as either a number or a percent of the total entitlements. Finally, the user can specify the media distribution type in the media distribution type box 584. The media distribution type determines whether users can see all media and/or kits available for a product or if they are limited to viewing specific media and/or kits. If the media distribution type is other than "All media/all types", then a media field may appear to allow the user to specify the specific media and/or kits associated with the entitlement. The user adds the defined constraints to the allocation by clicking the submit button 586.

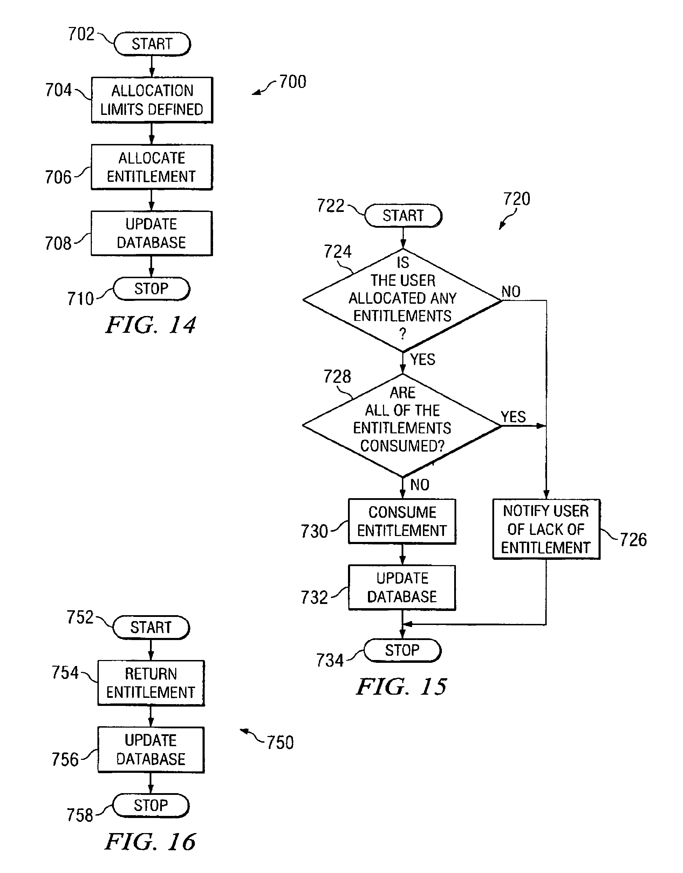

In one embodiment, the administrator can access an allocated entitlement return page, such as the allocated entitlement return page 600 shown in FIG. 12. The allocated entitlement return page 600 allows the administrator to return some or all of the allocated entitlements to the enterprise for use by other users, departments, or communities. The allocated entitlement return page 600 may be accessed by clicking one of the return links shown in FIGS. 6, 8, or 10. More specifically, by clicking the remove link 320 in FIG. 6, the administrator is directed to the allocated entitlement return page 600. The department line 602 and the product line 604 are pre-populated, but may be changed to other entities and/or products, as evidenced by the change in the product line 604 from Adobe Acrobat® v7.0 to Adobe Acrobat® v6.0. The start date 606, the end date 608, the quantity allocated 612, the quantity consumed 614, the distribution limit 610, the allocation cost, 618, the allocation currency 620, the allocation threshold 622, the version allocation 624, the version allocation units 626, and the media distribution type 628 are all pre-populated as well because these values were associated with the entitlement when the entitlement was allocated to the entity. Thus, the administrator merely has to modify the new allocation 616 to the quantity of entitlements that the entity desires to keep, and click the submit button 630 to initiate the entitlement return routine shown in FIG. 16. Generally, the new allocation 616 is a number no greater than the allocation 612 because a greater number would indicate that the entity is attempting to obtain entitlements, not return them. Similarly, the new allocation 616 is a number no less than the consumption 614 because a lower number would indicate that the entity is returning consumed licenses. In one embodiment, if the entity desires to return consumed entitlements, the administrator is presented with the unconsumed entitlement page shown in FIG. 13 so that the entitlements can be unconsumed prior to being returned to the enterprise.

In one embodiment, the administrator, manager, supervisor, or user is able to access an unconsume entitlement page, such as the unconsume entitlement page 650 shown in FIG. 13. The unconsume entitlement page 650 allows the administrator, manager, supervisor, or user to return the consumed entitlement to the entity level from which the entitlement was consumed, e.g. the enterprise, community, department, or user level. The unconsume entitlement page 650 may be accessed by clicking the return button 218 shown in FIGS. 4. The entitlement level buttons 652, the department line 654, and user line 658, and the product line 660 are pre-populated, but may be changed to other entities and/or products as desired. The search button 656 may assist the administrator, manager, supervisor, or user in modifying any of these fields. Furthermore, when the administrator, manager, supervisor, or user selects the desired entity and product, the total allocated 662, the total consumed 664, the start date 666, the end date 668, the distribution limit 670, the quantity allocated 672, and the quantity consumed 674 are all pre-populated as well because these values were associated with the entitlement when the entitlement was allocated to the entity. Thus, the administrator, manager, supervisor, or user merely has to modify the quantity 676 that they desire to unconsume, and click the unconsume button 678 to initiate the entitlement return routine shown in FIG. 16. Generally, the quantity 676 is a number no greater than the consumption 674 because a greater number would indicate that the entity is attempting to unconsume entitlements that have not been consumed. The quantity 676 is generally not a negative number either because a negative number would indicate that the user is attempting to consume license, not unconsume them.

In one embodiment, one or more of the components in the framework 100 allocate the entitlements to the various entities using an entitlement allocation routine, such as the entitlement allocation routine 700 shown in FIG. 14. The entitlement allocation routine 700 starts 702 when initiated by the user, such as when the user clicks on the submit button 488 in FIG. 9 or the submit button 586 in FIG. 11. The entitlement allocation routine 700 then checks to make sure that all of the required allocation limits have been defined 704. Generally, the required allocation limits are defined as part of the configuration process and are indicated on the entitlement allocation detail or other pages by the presence of an asterisk (*) or other such indicator of a required field. If all of the required fields are not present, the entitlement allocation routine 700 may request the additional information from the user.

Assuming the required information is present, the entitlement allocation routine 700 allocates the entitlement to the entity 706. More specifically, the entitlement allocation routine 700 performs one or more of the following steps: verifying that the enterprise owns the defined quantity of licenses to entitle, removes the defined quantity of the entitlements from the enterprise's group of entitlements, and indicating that the defined quantity entitlements are allocated to the entity. Only available, unconsumed entitlements can be allocated. If the entity is more than one user, such as a department with 5 people, the entitlement allocation routine 700 may allocate one entitlement to each person or may make the entitlements available on a first come, first served basis. The entitlement allocation routine 700 may also send out an email to at least one entity and/or the administrator notifying them of the entitlement allocation. The entitlement allocation routine 700 then updates one or more of the databases shown in FIG. 2 so that all of the affected pages shown herein reflect that the entitlement has been allocated to the entity 708. The entitlement allocation routine 700 then ends 710.

In an embodiment, one or more of the components in the framework 100 allow the various entities to consume their allocated entitlements according to an entitlement consumption routine, such as the entitlement consumption routine 720 shown in FIG. 15. Once all of the allocated entitlements for an entity level have been consumed, no more entitlements can be consumed until additional licenses are purchased. The entitlement consumption routine 720 starts when the user indicates a desire to consume the license 722, for example by downloading and running the software product onto his computer. The entitlement consumption routine 720 then determines whether the user is allocated any entitlements 724. If the consumption routine 720 determines that the user is not allocated any entitlements, then the consumption routine 720 notifies the user of the lack of entitlements 726, for example by sending the user an email, an instant message, or via a pop-up page. In notifying the user that he has not been allocated any entitlements, the entitlement consumption routine 720 may allow the entity the option of obtaining an allocation for a product using various methods, such as by acquiring an entitlement allocation from the enterprise's group of entitlements or by purchasing a license from a publisher, distributor, and/or seller. If the entitlement consumption routine 720 does allow the user to obtain an entitlement, the entitlement consumption routine 720 returns to block 724. Otherwise, the entitlement consumption routine 720 then ends 734.

If at block 724 the consumption routine 720 determines that the user is not allocated any entitlements, then the entitlement consumption routine 720 determines whether the entity has any unconsumed entitlements 728. It is possible that the entity may have been allocated an entitlement, e.g. as part of a department entitlement, but all of the allocated entitlements have been consumed such that there are not any unconsumed entitlements. If the entitlement consumption routine 720 determines that all of the entitlements have been consumed, then the consumption routine 720 notifies the user of the lack of entitlements 726, for example by sending the user an email, an instant message, or via a pop-up page. In notifying the user that he has not been allocated any entitlements, the entitlement consumption routine 720 may allow the entity the option of obtaining an allocation for a product using various methods, such as by acquiring an entitlement allocation from the enterprise's group of entitlements or by purchasing a license from a publisher, distributor, and/or seller. Alternatively, the entitlement consumption routine 720 may access the end dates for the consumed entitlements and notify the user when there will be available entitlements. If the entitlement consumption routine 720 does allow the user to obtain an entitlement, the entitlement consumption routine 720 returns to block 724. Otherwise, the entitlement consumption routine 720 then ends 734.

If at block 728 the entitlement consumption routine 720 determines that all of the entitlements have not been consumed, then the entitlement consumption routine 720 allows the user to consume the entitlement 730. More specifically, the entitlement consumption routine 720 performs one or more of the following steps: verifying that the enterprise owns an unallocated and/or unconsumed entitlement, removing the entitlement from the enterprise's group of entitlements, and indicating that the entitlement has been consumed by the entity. The entitlement consumption routine 720 may also send out an email to at least one entity and/or the administrator notifying them of the entitlement consumption. The entitlement consumption routine 720 may also send out an email to the administrator to inform them that the quantity of allocated entitlements approaches a threshold level. The entitlement consumption routine 720 then updates one or more of the databases shown in FIG. 2 so that all of the affected pages shown herein reflect that the entitlement has been consumed to the entity 732. The entitlement consumption routine 720 then ends 710.

In an embodiment, one or more of the components in the framework 100 return the entitlements to the various entities using an entitlement return routine, such as the entitlement return routine 750 shown in FIG. 16. The entitlement return routine 750 is applicable to both unconsumed an unallocated entitlements. The entitlement return routine 750 starts 702 when initiated by the user, such as when the user clicks on the update button 630 in FIG. 12 or the unconsume button 678 in FIG. 13. Once initiated, the entitlement return routine 750 returns the entitlement to the entitlement pool 754. More specifically, the entitlement return routine 750 performs one or more of the following steps: indicating that the defined quantity of entitlements are no longer being consumed by the entity, and indicating that the defined quantity of entitlements are no longer being allocated to the entity. If the entity is more than one user, such as a department with 5 people, the entitlement return routine 750 may return one entitlement from each person or may return the unconsumed entitlements first, then return the consumed entitlements on a first consumed, first returned or a first consumed, last returned basis. The entitlement return routine 750 may also send out an email to at least one entity and/or the administrator notifying them of the entitlement return. If desired, the entitlement return routine 750 may keep a history of returned entitlements. The entitlement return routine 750 then updates one or more of the databases shown in FIG. 2 so that all of the pages shown herein reflect that the entitlement has been returned to the entity 756. The entitlement return routine 750 then ends 758.

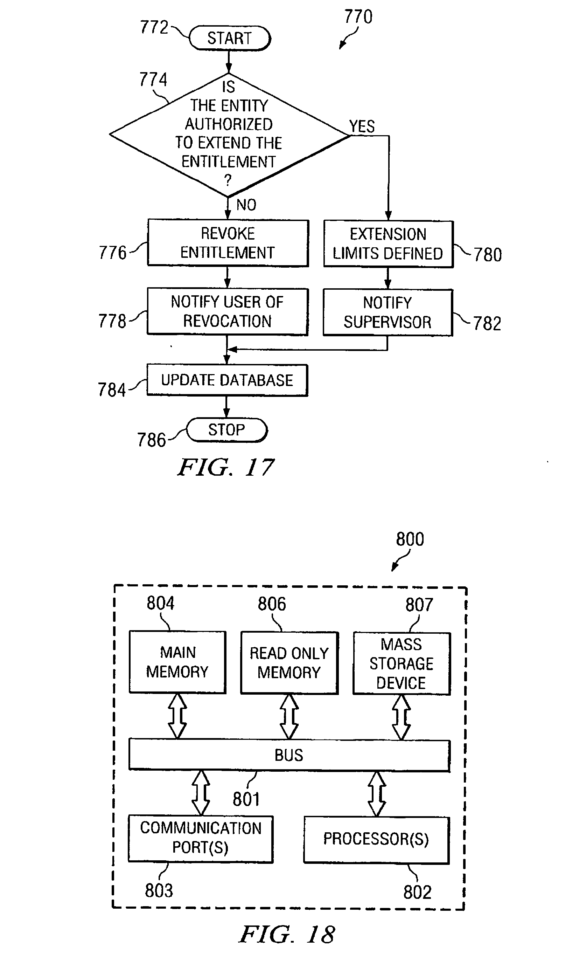

In an embodiment, one or more of the components in the framework 100 may revoke the entitlement from an entity using an entitlement revocation routine, such as the entitlement revocation routine 770 shown in FIG. 17. The entitlement revocation routine 770 starts when the time constraint has been satisfied, that is when current date meets or exceeds the entitlement duration or stop date, such as the end date specified in the end date calendar 470 in FIG. 9 or the end date 578 in FIG. 11. The entitlement revocation routine 770 then determines if the entity is authorized to extend the entitlement 774. There are some entities within the enterprise which should have the right to extend their entitlements. Such entities may include mission-critical departments, the information technology (IT) department, high priority users, and so forth. As part of the configuration process for the time bound enablement, these entities can be identified and afforded the right to extend their entitlement, if desired. For example, the entitlement coordinator can interact with the identity manager or another party to specify which entities have extendable entitlements.

If the entitlement revocation routine 770 determines that the entity is authorized to extend the entitlement, then the entitlement revocation routine 770 accepts the limits of the extension 780. The extension may be defined when the entity modifies its own entitlements such that the end date becomes some date in the future. The entity may also extend the terms of entitlement by entering a new entitlement expiration date on a pop-up window initiated by the entitlement revocation routine 770. The entitlement revocation routine 770 then notifies the administrator that the entity has extended the entitlement end date 780, for example, by email. The entitlement revocation routine 770 then updates one or more of the databases shown in FIG. 2 so that all of the affected pages shown herein reflect that the entitlement has been allocated to the entity 784. The entitlement revocation routine 770 then ends 786.

If the entitlement revocation routine 770 determines that the entity is not authorized to extend the entitlement, then the entitlement revocation routine 770 revokes the entitlement from the entity 776. More specifically, the entitlement revocation routine 770 performs one or more of the following steps: indicating that the defined quantity entitlements are no longer being allocated to the entity, and adding the defined quantity of the entitlements to the enterprise's group of entitlements. If the entity is more than one user, such as a department with 5 people, the entitlement revocation routine 770 may remove one entitlement from each person or may remove the unconsumed entitlements first, then remove the consumed entitlements on a first consumed, first removed or a first consumed, last removed basis. The entitlement revocation routine 770 then notifies the entity of the revocation 778, for example, by email. The entitlement revocation routine 770 may also send out an email to the administrator notifying them of the entitlement revocation. The entitlement revocation routine 770 then updates one or more of the databases shown in FIG. 2 so that the affected pages shown herein reflect that the entitlement has been allocated to the entity 784. The entitlement revocation routine 770 then ends 786.

FIG. 18 is an example of a computer system 800 with which embodiments of the present invention may be utilized. Computer system 800 represents an exemplary client system or server system from which enterprise users may initiate interactions with the digital content distribution framework 50 or upon which one or more of the digital content distribution framework components may run, respectively. In this simplified example, the computer system 800 comprises a bus 801 or other communication means for communicating data and control information, and one or more processors 802, such as Intel Itanium® or Itanium 2 processors, coupled with bus 801.

Computer system 800 further comprises a random access memory (RAM) or other dynamic storage device (referred to as main memory 804), coupled to bus 801 for storing information and instructions to be executed by processor(s) 802. Main memory 804 also may be used for storing temporary variables or other intermediate information during execution of instructions by processor(s) 802.

Computer system 800 also comprises a read only memory (ROM) 806 and/or other static storage device coupled to bus 801 for storing static information and instructions for processor(s) 802.

A mass storage device 807, such as a magnetic disk or optical disc and its corresponding drive, may also be coupled to bus 801 for storing instructions and information, such as configuration files, a key store and registration database, etc.

One or more communication ports 803 may also be coupled to bus 801 for supporting network connections and communication of information to/from the computer system 800 by way of a Local Area Network (LAN), Wide Area Network (WAN), the Internet, or the public switched telephone network (PSTN), for example. The communication ports 803 may include various combinations of well-known interfaces, such as one or more modems to provide dial up capability, one or more 10/100 Ethernet ports, one or more Gigabit Ethernet ports (fiber and/or copper), or other well-known network interfaces commonly used in inter-network environments. In any event, in this manner, the computer system 800 may be coupled to a number of other network devices, clients, and/or servers via a conventional network infrastructure, such as an enterprise's Intranet, server farm and/or the Internet, for example.

Optionally, operator and administrative interfaces (not shown), such as a display, keyboard, and a cursor control device, may also be coupled to bus 801 to support direct operator interaction with computer system 800. Other operator and administrative interfaces can be provided through network connections connected through communication ports 803.

Finally, removable storage media (not shown), such as one or more external or removable hard drives, tapes, floppy disks, magneto-optical discs, compact disk-read-only memories (CD-ROMs), compact disk writable memories (CD-R, CD-RW), digital versatile discs or digital video discs (DVDs) (e.g., DVD-ROMs and DVD+RW), Zip disks, or USB memory devices, e.g., thumb drives or flash cards, may be coupled to bus 801 via corresponding drives, ports or slots.

Embodiments of the present invention include various steps. The steps may be performed by hardware components or may be embodied in machine-executable instructions, which may be used to cause a general-purpose or special-purpose processor programmed with the instructions to perform the steps. Alternatively, the steps may be performed by a combination of hardware, software, and/or firmware.

Embodiments of the present invention may be provided as a computer program product which may include a machine-readable medium having stored thereon instructions which may be used to program a computer (or other electronic devices) to perform a process. The machine-readable medium may include, but is not limited to, floppy diskettes, optical disks, compact disc read-only memories (CD-ROMs), and magneto-optical disks, ROMs, random access memories (RAMs), erasable programmable read-only memories (EPROMs), electrically erasable programmable read-only memories (EEPROMs), magnetic or optical cards, flash memory, or other type of media / machine-readable medium suitable for storing electronic instructions. Moreover, embodiments of the present invention may also be downloaded as a computer program product, wherein the program may be transferred from a remote computer to a requesting computer by way of data signals embodied in a carrier wave or other propagation medium via a communication link (e.g., a modem or network connection).

While, for convenience, embodiments of the present invention may be described with reference to Microsoft® .NET software technologies, Simple Object Access Protocol (SOAP), and Extensible Markup Language (XML), Web Services Description Language (WSDL), and Universal Description, Discovery and Integration (UDDI), the present invention is equally applicable to various other software technologies, web services platforms, wire protocols, discovery mechanisms and description languages. For example, embodiments of the present invention may also be implemented with Java Technology, such as Java 2 Platform, Enterprise Edition (J2EE) software technologies available from Sun Microsystems, various other standards developed by the Organization for the Advancement of Structured Information Standards (OASIS), and the like. Similarly, various alternative serialized message, framing and protocol binding mechanisms may be employed and endpoint description and registry of endpoints may be in accordance with substitutes for UDDI and WSDL.

Finally, for purposes of illustration and for the sake of brevity, embodiments of the present invention are described in the context of a software distribution framework; however, the techniques and methodologies described herein are thought to be broadly applicable to the distribution of digital content in general.

While preferred embodiments of the invention have been shown and described, modifications thereof can be made by one skilled in the art without departing from the spirit and teachings of the invention. The embodiments described herein are exemplary only, and are not intended to be limiting. Many variations and modifications of the invention disclosed herein are possible and are within the scope of the invention. Specifically, while the process is described in terms of a continuous process, it is contemplated that the process can be implemented as a batch process. In addition, where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). Use of the term "optionally" with respect to any element of a claim is intended to mean that the subject element is required, or alternatively, is not required. Both alternatives are intended to be within the scope of the claim. Use of broader terms such as comprises, includes, having, etc. should be understood to provide support for narrower terms such as consisting of, consisting essentially of, comprised substantially of, etc.

Accordingly, the scope of protection is not limited by the description set out above but is only limited by the claims which follow, that scope including all equivalents of the subject matter of the claims. Each and every claim is incorporated into the specification as an embodiment of the present invention. Thus, the claims are a further description and are an addition to the preferred embodiments of the present invention. The discussion of a reference in the herein is not an admission that it is prior art to the present invention, especially any reference that may have a publication date after the priority date of this application. The disclosures of all patents, patent applications, and publications cited herein are hereby incorporated by reference, to the extent that they provide exemplary, procedural or other details supplementary to those set forth herein.

## Claims

1. A computer readable media containing instructions for a processor to implement a plurality of steps comprising:
accessing a time constraint for an entitlement;
determining whether the time constraint has been satisfied; and
responsive to the determination that the time constraint has been satisfied, modifying the entitlement;
wherein the duration of the entitlement is less than the duration of the license for the digital content.

2. The computer readable media of claim 1 wherein the modification of the entitlement comprises revoking the entitlement.

3. The computer readable media of claim 2 wherein the steps further comprise:
determining whether an entity is authorized to modify the time constraint;
responsive to the determination that the entity is authorized to modify the time constraint, accepting a time constraint modification; and
delaying modification of the entitlement until the time constraint modification has been satisfied.

4. The computer readable media of claim 3 wherein the steps further comprise:
delaying the implementation of the time constraint modification until the extension has been approved by a supervisor.

5. The computer readable media of claim 1 wherein the modification of the entitlement comprises allowing an entity to consume the entitlement.

6. The computer readable media of claim 5 wherein the steps further comprise:
determining whether the entitlement has been allocated to the entity;
responsive to the determination that the entitlement has been allocated to the entity, determining whether the entitlement is not already consumed; and
responsive to the determination that the entitlement is not already consumed, allowing an entity to consume the entitlement.

7. The computer readable media of claim 6 wherein the steps further comprise:
responsive to the determination that the entitlement has not been allocated to the entity, preventing the entity from consuming the entitlement.

8. The computer readable media of claim 7 wherein the steps further comprise: notifying the entity that the entity is not allocated the entitlement.

9. The computer readable media of claim 6 wherein the steps further comprise:
responsive to the determination that the entitlement is consumed, preventing the entity from consuming the entitlement.

10. The computer readable media of claim 9 wherein the steps further comprise: notifying the entity that the entity has not consumed the entitlement.

11. The computer readable media of claim 1 wherein the modification of the entitlement comprises allocating the entitlement to an entity.

12. A method comprising:
accepting a time constraint for an entitlement;
allocating the entitlement to an entity;
allowing the entity to consume the entitlement;
determining whether the time constraint has been satisfied; and
responsive to the determination that the time constraint has been satisfied, revoking the entitlement from the entity.

13. The method of claim 12 wherein the time constraint is a stop date for consuming the entitlement.

14. The method of claim 12 wherein the time constraint is a duration based upon the date of allocation.

15. The method of claim 12 wherein the time constraint is a duration based upon the date of consumption.

16. The method of claim 12 wherein the time constraint is a duration based upon the date of last use.

17. The method of claim 12 wherein the entity is allowed to extend the time constraint.

18. A system comprising:
a processor configured to implement a plurality of steps comprising:
accepting a time constraint for an entitlement;
determining whether the time constraint has been satisfied; and
responsive to the determination that the time constraint has been satisfied, modifying the entitlement.

19. The system of claim 18 wherein the time constraint is a start date for allocating the entitlement and the modification of the entitlement is allocating the entitlement to an entity.

20. The system of claim 18 wherein the time constraint is a start date for consuming the entitlement and the modification of the entitlement is allowing an entity to consume the entitlement.
